# EUROPÄISCHE PATENTANMELDUNG

(11) **EP 1 049 325 A2**
(43) Veröffentlichungstag der Anmeldung: **02.11.2000**
(21) Anmeldenummer: 00250134.4
(22) Anmeldetag: 28.04.2000
(51) Int. Cl.: H04N 5/00

(54) **Interaktives Multimedia-Card-Modul**

(30) Priorität: 30.04.1999 DE 19921094
(71) Anmelder: Heinrich-Hertz-Institut für Nachrichtentechnik Berlin GmbH, 10587 Berlin (DE)
(72) Erfinder: Weissig, Christian, 13156 Berlin (DE)
(74) Vertreter: Rudolph, Margit

(57) **Zusammenfassung**

Bekannte DVB-Karten für eine individuelle Zugangsberechtigung bei Set-Top-Boxen für digitales Fernsehen benutzen anwenderspezifische Smart-Cards als externes Speichermodul in Form eines Securitymoduls zur Bereitstellung von Zahlencodes. Um große Datenmengen speichern zu können ist bei dem erfindungsgemäßen Card-Modul (CMO) vorgesehen, dass das externe Speichermodul (PSME) als wechselbarer Speicherplatz mit einer hohen Zugriffsrate für den Programmstrom (PS) ausgebildet ist und einen Speicher-Steckverbinder (PPC) für die Datenschnittstelle (CF-I, ATA-I) aufweist, der mit einem entsprechenden Einschub-Steckverbinder (PPI) in dem integrierten Einschubplatz (PI) zur Ankopplung an den Mikroprozessor (CPU) trennbar verbunden ist, und die Funktionssteuerung über ein externes, über den Karten-Steckverbinder (PPA) kontaktiertes Gerät (G) erfolgt. Dadurch bekommt das Card-Modul (CMO) die Funktionalität eines leistungsfähigen MiniRecorders (MR), mit dem Programmstromdaten (PS) gleichzeitig aus- und eingelesen werden können. Als externe Speichermodule können CF-Cards (CFD) oder MicroDrives (HDD) zum Einsatz kommen. Einschub- und Karten-Steckverbinder (PPI, PPA) können durch eine mikroprozessorgesteuerte Pinumbelegung unterschiedliche Schnittstellen (DVB-CI, PCC-I, IDE-I, SCSI-I) bereitstellen. Durch die hohe Flexibilität kann das erfindungsgemäße Card-Modul (CMO) in Werbeboxen oder auch im privaten Bereich als miniaturisierter Videorecorder eingesetzt werden.

## Beschreibung

Die Erfindung bezieht sich auf ein interaktives Multimedia-Card-Modul im PC-Card-Format zur Verarbeitung von digitalen MPEG-Transportstromdaten mit einem Karten-Steckverbinder, auf dem eine einheitliche Schnittstelle nach DVB-Standard bereitstellbar ist, einem integrierten Einschubplatz zur Kontaktierung eines externen Speichermoduls und mit einer Cardmodul-Hardware, die ein Speichermedium, eine Transportstrom-Verarbeitungslogik und ein Mikroprozessor-System aufweist.

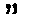 Digital Video Broadcasting" (DVB) ist der für Europa geschaffene Standard für digitales Fernsehen, der sich allmählich zu einem globalen Standard entwickelt. Ein wesentlicher Vorteil des DVB liegt in der Definition einer einheitlichen Schnittstelle zur Einbindung verschiedener Zugriffssysteme von unterschiedlichen Programmanbietern. Diese 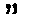 einheitliche Schnittstelle" (DVB-Common Interface) ist das Bindeglied zwischen den nach DVB vereinheitlichten Komponenten und leistungsanbietereigenen Charakteristika und stellt eine Schnittstelle für den Transportdatenstrom in beide Signalrichtungen dar, die auch für andere Anwendungen eingesetzt werden kann.

Mit dem Begriff 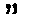 Personal Computer Memory Card International Association" (PCMCIA) wird gleichzeitig Organisation, Norm und Hardware der PC-Card (oder PCMCIA-Card) bezeichnet, die nicht mit den herkömmlichen PC-Erweiterungskarten zu verwechseln sind. Die PCMCIA-Norm umfasst sowohl Speicherkarten als auch Ein-/Ausgabekarten (I/O-Karten) und definiert neben der Hardwareschnittstelle auch die Softwareschnittstelle. Die Kartenvielfalt reicht von der einfachen Speicherkarte in den verschiedenen Technologien über Festplatten, Modems und LAN-Adapter bis hin zu Spezialanwendungen wie Datenverschlüsselung und Messwerterfassung. Das Anwendungsspektrum ist dadurch nicht nur auf den PC beschränkt. PC-Karten finden ebenso Einsatz beispielsweise in digitalen Kameras, Messgeräten, Programmiergeräten, Set-Top-Boxen zur Pay-TV-Legitimierung oder in Telefongeräten. Die physischen Vorgaben des Standards beschreiben die Abmessungen der Karte in Bauhöhe und Länge (Typ I,II,III) und des Karten-Steckverbinders ( 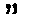 PC-Card-Format").

Der Transportdatenstrom wird aus dem von der Übertragungsstrecke, z.B. Kabel oder Satellit, gelieferten Signal mit einem DVB-Demodulator erzeugt. Er enthält in der Regel die kodierten, in einzelne Pakete konstanter Länge aufgeteilte Bestandteile der Video-, Audio- und Zusatzdaten mehrerer Programme und hat eine hohe Datenrate. Bei den Kodierungsverfahren im digitalen Rundfunk- und Telekommunikationsbereich hat sich der Standard der 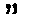 Moving Pictures Experts Group" (MPEG) international durchgesetzt. Die nach MPEG-Standard in den verschiedenen Versionen komprimierten und kodierten Daten werden für die Datenübertragung im Transportstrom paketweise zusammengefasst. Pro Kanal werden mehrere Programme im Zeitmultiplex übertragen. Die Pakete sind mit Identifikations- und Synchronisationsdaten ausgestattet, um sie im Empfänger wieder den entsprechenden Programmen zuordnen zu können. Ein entsprechender Decoder, beispielsweise in einer Set-Top-Box, decodiert immer nur ein Programm durch Ausfilterung des entsprechenden Programmdatenstroms, dessen Abspeicherung, beispielsweise für eine Archivierung, dann sinnvoll ist.

Der **Stand der Technik**, von dem die Erfindung ausgeht, wird beschrieben in dem Aufsatz 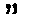 DVB : Common Interface als ideale interaktive Multimedia-Umgebung" von I. Okoth et al., Fernseh- und Kino-Technik, 51. Jahrgang, Nr.12/97, Seiten 854 bis 856. Das hieraus bekannte interaktive Multimedia-Card-Modul in der Größe eines PC-Card-Gehäuses Typ II weist ein anbieterspezifisches Modul zur Programmentschlüsselung für ein Zugriffssystem als wesentliche Komponente des DVB-Standards und einen integrierten Einschubplatz für ein externes Speichermodul in Form einer einfachen personenspezifischen Smart-Card für die Zugriffslegitimierung des Benutzers auf. Die Kontaktierung erfolgt über auf einem Chip integrierte Kontaktflächen. Die Speicherkapazität der Smart-Card ist nicht zur Abspeicherung größerer Datenmengen geeignet und umfasst nur anwenderindividuelle Zahlenkombinationen. Der Speicherplatz auf dem Modul zur Verarbeitung der Signaldaten ist sehr begrenzt. Als Empfänger können Netzwerk-Computer, Fernseher, PC oder Set-Top-Boxen eingesetzt werden. Das Modul kann für TV-, Multimedia- oder Kommunikationsanwendungen ausgebildet sein. Hauptanwendungsfall für das bekannte Multimedia-Card-Modul ist jedoch der Einsatz bei einer Set-Top-Box, die dadurch zum offenen, anbieterunabhängigen System wird.

Das bekannte DVB-CI im PC-Card-Format wird zum Descrambeln (Entschlüsseln) eines verschlüsselten Transportstromes sowie zur Pay-TV-Legitimierung eingesetzt. Eine Aufzeichnungsmöglichkeit (Speicherung) von Videoinformationen besteht bei der digitalen Set-Top-Box und bei anderen Geräten in der Regel nur durch Anschluss eines Speichermediums an vorhandene analoge Videoausgänge. Dabei können nur dekodierte Videosignale aufgezeichnet werden. Wiedergaben (Einspeisungen) können nur über einen analogen Antenneneingang in modulierter, d.h. analoger Form vorgenommen werden. Dieser Vorgang ist sehr aufwendig.

In der älteren, nicht vorveröffentlichten Anmeldung DE 198 47 071.1 wird ein auch von dem oben zitierten Aufsatz als nächstliegendem Stand der Technik ausgehendes anderes interaktives Multimedia-Card-Modul beschrieben, bei dem die DVB-Schnittstelle mit einer PC-Card-Schnittstelle kombiniert ist, um das Card-Modul nicht nur über eine Set-Top-Box, sondern auch über das PCMCIA-Interface eines stationären Computers oder eines Notebooks betreiben zu können. Ein hier aufgeschriebener Transportstrom kann dann anschließend wieder über das DVB-CI einer Set-Top-Box abgespielt werden. Der erforderliche Transportstromspeicher ist dazu fest in das Modul integriert. Dieser ist jedoch für ein Aufnehmen des Transportstromes in Echtzeit nicht geeignet, da er aufgrund seiner Technologie nur sehr langsames Schreiben zulässt. Auf dem Multimedia-Card-Modul sind die beiden Schnittstellen auf einem gemeinsamen Karten-Steckverbinder bereitstellbar. Dabei steuert ein Mikroprozessor die erforderliche Signalumbelegung der einzelnen Steckerpins in Abhängigkeit von der aktuell bereitzustellenden Schnittstelle.

Aus dem Aufsatz 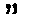 Server : Bilder von der Platte" (Rolf von Kaldenberg, Fernseh- und Kino-Technik 51, Jahrg.Nr.12/1997, S. 858-860) ist es bekannt, Festplattenlaufwerke für die Aufzeichnungen von Video- und Audiosignalen einzusetzen. Dabei reicht der Aufzeichnungsumfang je nach Festplattenkapzität von einigen Sekunden bis zu mehreren Stunden. Ziel ist es, preisgünstige und wartungsfreie Videoaufzeichnungsgeräte zu entwickeln, die sich durch einen schnellen Schreib-Lese-Zugriff in Echtzeit auszeichnen, auch im Hinblick auf sogenannte 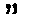 Video-on-Demand" - Serverapplikationen, insbesondere auch als 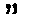 bandloser Videorecorder". Zu den weiteren Vorzügen solcher Video-Server-Systeme gehören auch die Möglichkeiten der gleichzeitigen Aufnahme und Wiedergabe und der simultanen Wiedergabe von verschiedenen Video- und Audiokanälen. Die Aufzeichnung kann je nach System und Hersteller mit einer zum Teil variablen oder wählbaren Kompressionsrate nach verschiedenen Standards erfolgen.

Zu den bandlosen Videorecordern zählen auch die sogenannten 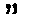 Disk-Recorder" mit austauschbaren Festplatten. Die digitalen Disk-Recorder der V1 Disk-Recorder Familie der Firma Doremi Labs., Los Angeles (Website www.ptv-gmbh.de/catalog/doremi/home.htm, Stand 13.04.1999) weisen Festplatten auf, die durch Wechselrahmen problemlos austauschbar sind. Diese Recorder weisen alle eine zusätzliche SCSI-Schnittstelle auf und können Daten aus anderen Systemen direkt übernehmen (V1M/Server). Die Abmaße dieser bekannten Disk-Recorder liegen jedoch im Bereich bekannter Videorecorder. Auch eine Minimalversion ohne eigene Bedienelemente mit zwei Einschubplätzen für Festplatten (V1M) weist ein 19-Zoll-Einschubgehäuse auf. Auch von der Firmen Tektronix und Sony sind derartige digitale Disk-Recorder mit guten Leistungsdaten bekannt. Alle Recorder weisen jedoch relativ große Abmaße und Preise auf und sind damit hauptsächlich für den professionellen Anwenderbereich geeignet.

Im Hinblick auf die zuvor gemachten Ausführungen ist es daher die **Aufgabe** der vorliegenden Erfindung, ein interaktives Multimedia-Card-Modul im PC-Card-Format zur Verarbeitung von digitalen MPEG-Daten mit einem externen Speichermodul der oben beschriebenen Art so weiterzubilden, dass eine große Speicherkapazität und Zugriffsrate auf Programmstromdaten erzielt wird, um die Funktionalität eines Videorecorders für das Card-Modul erreichen zu können. Dabei soll jedoch die Baugröße äußerst kompakt und weiterhin im Standardkarten-Format liegen. Für eine bevorzugte Verwendung im privaten Bereich soll das Card-Modul einfach und unempfindlich in der Handhabung sowie kostengünstig sein. Es soll weitgehend einfache Standardelemente aufweisen sowie flexibel und an weiterentwickelte Technologien anpassbar sein.

Als **Lösung** für diesen Aufgabenkomplex ist bei der Erfindung vorgesehen, dass das externe Speichermodul als wechselbares Speichermedium mit einer hohen Zugriffsrate für die im Transportstrom enthaltenen Programmstromdaten ausgebildet ist und einen Speicher-Steckverbinder für die Datenschnittstelle aufweist, der mit einem entsprechenden Einschub-Steckverbinder in dem integrierten Einschubplatz zur Ankopplung an die Kartenlogik und an den Mikroprozessor trennbar verbunden ist, und die Funktionssteuerung über ein externes, über den Karten-Steckverbinder kontaktiertes Gerät erfolgt.

Das erfindungsgemäße Multimedia-Card-Modul stellt einen MiniRecorder mit einer DVB-Schnittstelle in der Art eines multifunktionalen Plug-In dar, mit dem über entsprechende Set-Top-Boxen interaktiv digitales Fernsehen erfolgen kann. Dabei entsprechen die Abmessungen des MiniRecorders dem PC-Card-Format Typ II (Scheckkartenformat 85,6 mm x 54 mm x 5 mm). Den wesentlichen Unterschied zu den bekannten Modulen stellt die Auslagerung des bislang stets fest integrierten Programmstromspeichers dar. Dadurch wird ein bislang nicht erreichte Kapazität und Flexibilität bei einem derartig kleinen Modul möglich. Der über die robuste Steckverbindung einfach austauschbare Programmstromspeicher ist entsprechend mit einer Videokassette vergleichbar. Die über ein externes Gerät bzw. die entsprechende Benutzer-Schnittstelle erfolgende Steuerung des MiniRecorders trägt ebenfalls zu seiner extrem kleinen Baugröße und zu seiner Einfachheit bei. Je nach Gerät ist außerdem eine Funktionsanpassung möglich. Mit einem solchen digitalen Videorecorder können speziell auch Sonderfunktionen, wie beispielsweise durch Pausen erzeugte zeitversetzte Abspielung mit gleichzeitig weitergeführter Aufnahme, Zeitlupe und Vorschau, ausgeführt werden. Insgesamt ergeben sich für das erfindungsgemäße Multimedia-Card-Modul in einer Ausführung als extrem preiswerter und kleiner digitaler Videorecorder für Set-Top-Boxen Anwendungsmöglichkeiten beispielsweise zu gezielten Werbeeinblendungen bei digitalen Kinovorführungen oder zum Einsatz in Werbeboxen.

Wesentlich für das erfindungsgemäße Card-Modul ist die Ausbildung des externen, wechselbaren Transportstromspeichers. Zum einen muss er über eine für digitale Videozwecke ausreichende Speicherkapazität mit einer ebenfalls ausreichend hohen Zugriffsrate verfügen. Zum anderen muss er aber auch von seiner Baugröße so kompakt sein, dass eine Integration in das Card-Modul möglich ist. Weiterhin muss eine einfache Austauschbarkeit des externen Speichermoduls und Flexibilität der Einschub-Schnittstelle gegeben sein. Dazu kann diese auf verschiedenen Einschub-Steckverbinder realisiert sein, die entsprechend im oder zusammen mit dem Einschub austauschbar sind. Nach einer Ausbildungsform des erfindungsgemäßen Card-Moduls ist es aber auch möglich, dass die Datenschnittstellen auf dem Einschub-Steckverbinder alternativ durch eine mikroprozessorgesteuerte entsprechende Signalumbelegung der Steckerpins bereitstellbar sind. Damit wird eine hohe Flexibilität des Einschub-Steckverbinders erreicht, sodass leicht unterschiedliche externe Speichermodule anschließbar sind. Die Möglichkeit und Durchführbarkeit einer solchen variablen Steckerbelegung wurde bereits als Erfindungsgegenstand der älteren Anmeldung DE 198 47 071.1 näher beschrieben.

Bezüglich der Art des externen Speichermoduls kann es nach einer nächsten Ausbildungsform der Erfindung vorgesehen sein, dass dieses in Form einer Compact-Flash-Card oder in Form eines miniaturisierten Festplattenmoduls mit einer Compact-Flash- oder ATA-Schnittstelle ausgeführt ist. Compact-Flash-Cards (CF-Card) sind genormt und werden von vielen Herstellern angeboten. Sie haben eine besonders kleine Baugröße (36,4 mm x 42,8 mm x 3,3 mm) und können eine Speicherkapazität von derzeit bis zu 64 MB haben. Das auf einem Steckverbinder bereitgestellte CF-Interface ist ein speziell für die CF-Card entwickeltes Interface, ähnlich dem ATA-Interface.

Als Speichermedium sind aber nach einer nächsten Erfindungsausgestaltung auch kleinste Festplatten, sogenannte 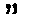 Hard Disk Drive" (HDD), mit ähnlich kleinen Abmessungen einsetzbar. Beispielsweise bietet die Firma IBM die Mini-Festplatte 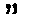 microdrive" mit einer derzeitigen Speicherkapazität von bis zu 340 MB mit zwei Zugriffsköpfen an, was einer Aufzeichnungsdauer von ca. 15 Minuten bei einer Datenrate von 3 Mb/s entspricht. Weiterentwicklungen lassen Speicherkapazitäten oberhalb 1 GB in absehbarer Zeit erwarten. Auch die Mini-Festplatte verfügt über einen Steckverbinder mit einer CF-Schnittstelle. Mit den genannten Speichermedien sind für den erfindungsgemäßen MiniRecorder maximale Datenraten (HDD) für den Transportstrom über den Karten-Steckverbinder von bis zu 72 Mbit/s und für den Programmstrom über den Einschub-Steckverbinder von bis zu 32 Mbit/s erreichbar. Damit ist bei einem solchen externen Speichermodul eine optimale Videofunktionalität mit parallelen Aufnahme- und Wiedergabefunktionen in Echtzeit gewährleistet.

Weiterhin kann für das Multimedia-Card-Modul erfindungsgemäß aber auch vorgesehen sein, dass das externe Speichermodul in Form einer IDE- oder PCMCIA-Festplatte ausgeführt ist die über ein Adapterkabel mit dem Einschub-Steckverbinder in dem integrierten Einschubplatz trennbar verbunden ist. Damit bewegt sich die Größe der Speicherkapazität in einem Bereich von zur Zeit mehr als 10 GB. Durch den Anschluss an eine normale Festplatte verringert sich für das Modul zwar die kompakte Bauform und örtliche Unabhängigkeit. Für spezielle Anwendungen, insbesondere im Zusammenhang mit der kompletten Abspeicherung ganzer Videofilme, muss das aber derzeit noch in Kauf genommen werden.

Schließlich kann nach einer nächsten Erfindungsfortführung das externe Speichermodul in Form einer beschreibbaren CD/DVD ausgeführt ist, die mittels eines CD-Brenners beschreibbar und mittels eines CD/DVD-Geräts abspielbar ist, die über Adapterkabel mit dem Einschub-Steckverbinder in dem integrierten Einschubplatz trennbar verbunden sind. Die Nutzung von CDs (Compact Disk) als individuelles Speichermedium gewinnt zunehmend - auch im privaten Bereich - an Bedeutung. Bei CDs handelt es um sichere und hochgenaue Speichermedien mit einer guten und schnellen Datenzugriffsmöglichkeit. Im Hinblick auf die DVD-Technik nimmt der zur Verfügung stehende Speicherplatz auf einer DVD (Digital Versatile Disk) auch noch weiter zu.

Als Steuergerät für das erfindungsgemäße Card-Modul eignet sich nach einer weiteren Erfindungsfortführung eine Set-Top-Box, mit der das Card-Modul über die DVB-Schnittstelle verbunden ist. Die Set-Top-Box als Decoder für digitales Fernsehen ist ohnehin im Zusammenhang mit Videoanwendungen in den meisten Fällen vorhanden. Sie übernimmt auch die Funktion der weiteren Datenverarbeitung der von dem Card-Modul übergebenen Transportstromdaten zur Digital-Analog-Wandlung und zur endgültigen Darstellung auf einem Bildschirm und Verbreitung über Lautsprecher.

Zur Verbindung mit anderen Geräten, die andere Schnittstellen-Konfigurationen aufweisen, ist es entsprechend einer nächsten Erfindungsfortführung vorteilhaft, wenn auf dem Karten-Steckverbinder alternative Schnittstellen durch eine mikroprozessorgesteuerte entsprechende Signalumbelegung der Steckerpins bereitstellbar sind. Dadurch werden verschiedene gleichwertige Schnittstellen auf einem gemeinsamen Steckplatz implementiert. Es wird ein Datenaustausch über einen Transportstrom beispielsweise zwischen Geräten mit DVB-Schnittstelle und PC-Card-fähigen Geräten ermöglicht und eine hohe Flexibilität und Systemunabhängigkeit gewährleistet. Für diese Funktionalität ist der bei DVB-Cards übliche Aufbau um die Komponenten 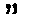 Schnittstellensteuerung" und 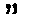 Signalumschaltung" erweitert, die in der Schaltung zusätzlich implementiert sein können. Das Umschalten zwischen den schnittstellenspezifischen Signalbelegungen als Realisierung der unterschiedlichen Verknüpfungen wird in Abhängigkeit von der zu aktivierenden Betriebsart vorgenommen.

Wenn auf dem Card-Modul eine PC-Card-Schnittstelle implementierbar ist, kann nach einer nächsten Erfindungsausgestaltung das externe Gerät zur Funktionssteuerung ein Rechner sein, mit dem das Card-Modul über die PC-Card-Schnittstelle trennbar verbunden ist. Transportstromdaten-Verarbeitung und damit Videodarstellungen sind damit auch auf einem Rechner, einem PC oder einem Notebook möglich, die über die entsprechende PC-Card-Schnittstelle dann auch die Steuerfunktionen des MiniRecorders übernehmen. Ebenfalls kann auf dem Card-Modul eine SCSI-Schnittstelle zur Verbindung mit weiteren externen Geräten vorgesehen implementiert sein. Hierbei kann es sich beispielsweise um einen weiteren PC oder externe Speichermedien handeln. SCSI-Schnittstellen benötigen ein eigenes Protokoll, das in einem eigenen Controller oder in dem vorhandenen Mikroprozessor abgearbeitet werden kann Die Funktionalität des erfindungsgemäßen Multimedia-Card-Moduls entfernt sich durch diese Schnittstelle zwar von dem Einsatz als MiniRecorder, macht es aber für entsprechend neue anwenderspezifische Applikationen geeignet, beispielsweise für die Funktion eines CD-Brenners. Die Flexibilität des Card-Moduls wird dadurch noch weiter erhöht.

**Ausbildungsformen der Erfindung** zum weiteren Verständnis des erfindungsgemäßen interaktiven Multimedia-Card-Moduls werden nachfolgend anhand der schematischen Figuren näher erläutert. Dabei zeigt :
- **Figur 1**: eine Ansicht des erfindungsgemäßen Card-Moduls mit zwei austauschbaren externen Speichermodulen,
- **Figur 2**: die Architektur des erfindungsgemäßen Card-Moduls in der Funktionalität als MiniRecorder und
- **Figur 3**: ein Zeitdiagramm für einen Aktivitätsverlauf des MiniRecorders.

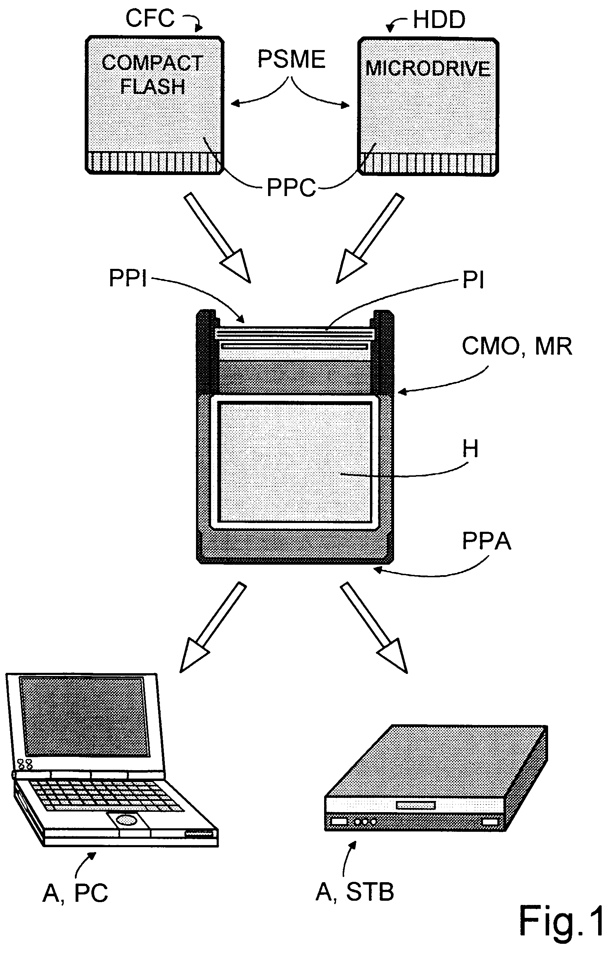

Die **Figur 1** zeigt ein interaktives Multimedia-Card-Modul **CMO** in der Funktion eines MiniRecorders **MR** in einem Gehäuse **H**. Auf der einen Seite weist der MiniRecorder **MR** im Gehäuse **H** einen Karten-Steckverbinder **PPA** auf. Auf der anderen Gehäuseseite ist ein Einschubplatz **PI** mit einem Einschub-Steckverbinder **PPI** angeordnet. Mit dem Einschub-Steckverbinder **PPI** kann ein externes Speichermodul **PSME** für den Programmstrom **PS** über einen auf dem Modul **PSME** integrierten Speicher-Steckverbinder **PPC** trennbar verbunden werden. Im dargestellten Ausführungsbeispiel handelt es sich bei dem externen, auswechselbaren Speichermodul **PSME** um eine CF-Card **CFC** oder um einen MicroDrive **HDD** mit jeweils einer CF-Schnittstelle **CF-I**. Eine abwechselnde Nutzung der beiden Speichermodule **PSME** je nach Anwendungsfall ist ohne weiteres möglich.

Mit dem Karten-Steckverbinder **PPA** ist der MiniRecorder **MR** mit der DVB-Schnittstelle **DVB-CI** eines externen Geräts **A**, beispielsweise einer Set-Top-Box **STB**, verbindbar. Dazu wird auf dem Karten-Steckverbinder **PPA** ebenfalls eine DVB-Schnittstelle **DVB-CI** bereitgestellt. Alternativ kann es sich bei dem externen Gerät **A** aber auch um einen Notebook **PC** oder dergleichen mit einer entsprechenden PC-Card-Schnittstelle **PCC-I** handeln. Zur Ankopplung stellt der MiniRecorder **MR** auf dem Karten-Steckverbinder **PPA** über eine entsprechend angesteuerte Pinbelegung eine PC-Card-Schnittstelle **PCC-I** alternativ zur Verfügung.

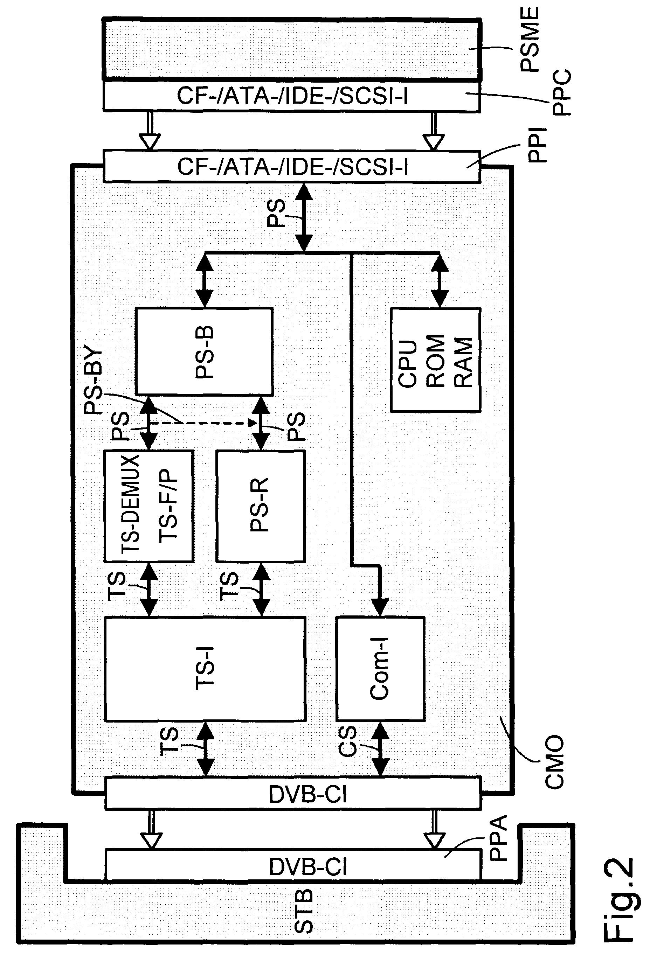

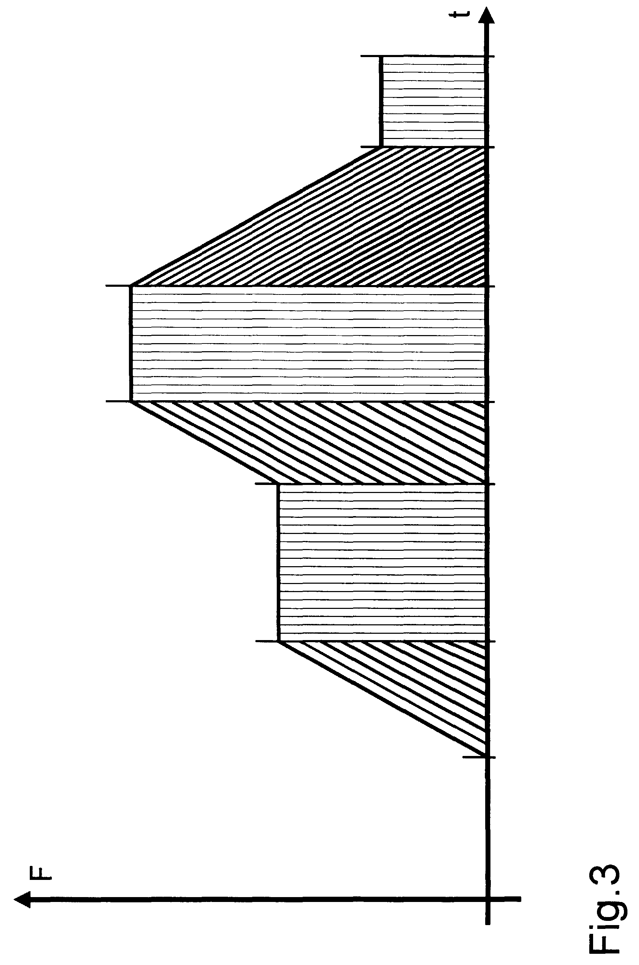

In der **Figur 2** ist die grundlegende Architektur eines erfindungsgemäßen interaktives Multimedia-Card-Modul **CMO** zum Anschluss an die einheitliche DVB-Schnittstelle DVB-CI einer Set-Top-Box **STB** dargestellt. Neben den bereits im Zusammenhang mit der Figur 1 erläuterten Elementen sind hier interne Bauelemente zur Verarbeitung des Transportstromes **TS** und des Programmstromes **PS** dargestellt. Alle externen und internen Schnittstellen **DVB-CI, CF/ATA-I, Com-I, TS-I** sind über eine Systemsteuerlogik mit einem integrierten Mikroprozessor **CPU** und zugeordneten internen Arbeitsspeichern **ROM**, **RAM** verbunden. Hinter dem Transportstrom-Interface **TS-I** sind für den eingehenden Transportstrom **TS** ein Demultiplexer **TS-DEMUX** mit einem Filter bzw. Parser **TS-F/P** zur Datenstromaufteilung, Interpretation und Ausfilterung des gewünschten Programmstromes **PS** sowie ein Buffer **PS-B** als Zwischenspeicher zur Erzeugung eines kontinuierlichen Transport- bzw., Programmstromes **TS,PS** angeordnet. Hinter dem Buffer **PS-B** wird der Programmstrom **PS** über die CF- oder ATA-Schnittstelle **CF/ATA-I** dem externen Speichermodul **PSME** zugeführt. Der ausgehende Programmstrom **PS** wird über einen Regenerator **PS-R** geleitet. Hier finden die Regelung der Datenrate und die Erzeugung der erforderlichen Transportstrom-Steuersignale statt. Sollen eingehende Daten sofort gesendet werden, werden diese über einen Programmstrom-Bypass **PS-BY** geleitet. Eine Speicherung in dem externen Speichermodul **PSME** findet dann nicht statt. Diese erfolgt, wenn Zeitlupe o.ä. erwünscht ist (vgl. Fig.3)

Die **Figur 3** zeigt einen möglichen Zeitverlauf für die Betriebsweise eines erfindungsgemäßen Card-Moduls in der Funktion eines MiniRecorders. Über der Zeitachse **t** sind verschiedene Betriebszustände aufgetragen. Die hellgrau schraffierten Zeitintervalle bezeichnen den Zustand des normalen Sehens in Echtzeit. In diesen Zeitintervallen findet keine Veränderung des Speicherfüllstandes **F** statt, der auf der Ordinate aufgetragen ist. Mittelgrau schraffiert sind Bereiche der Unterbrechung, in denen der Betrachter nicht anwesend ist oder bereits gesendete Sequenzen noch einmal, beispielsweise in Zeitlupe, betrachten will. In diesen Zeiten wird aufgenommen und der Füllzustand **F** vergrößert sich entsprechend. Dunkel schraffierte Intervalle sind Aufholintervalle, in denen ein schneller Vorlauf, beispielsweise zum Überspringen von Werbeblöcken, stattfindet. Dieser Vorgang verringert den Füllzustand **F** wieder. Im Extremfall erreicht dieser die Nullmarke, dann erfolgt beispielsweise eine Fernsehvorführung ohne Zeitversatz. Der erfindungsgemäße MiniRecorder mit seiner großen Speicherkapazität und seiner Flexibilität bei einfachster Handhabung stellt damit für den Benutzer eine sinnvolle Einrichtung dar, die den Komfort beim Betrachten und Bearbeiten von digitalen Datenströmen wesentlich erhöht.

### Bezugszeichenliste

- **A**: externes Gerät
- **ATA-I**: ATA-Schnittstelle
- **CD**: Compact Disk
- **CFC**: Compact-Flash-Card
- **CF-I**: CF-Schnittstelle
- **CMO**: Multimedia-Card-Modul
- **Com-I**: interne Schnittstelle
- **CPU**: Mikroprozessor
- **CS**: Steuerung
- **DVB-CI**: einheitliche DVB-Schnittstelle
- **F**: Speicherfüllstand
- **H**: Gehäuse
- **HDD**: Hard-Disk-Drive, Microdrive
- **IDE-I**: IDE-Schnittstelle
- **MR**: MiniRecorder
- **PI**: Einschubplatz
- **PC**: Notebook o.ä.
- **PCC-I**: PC-Card-Schnittstelle
- **PPA**: Karten-Steckverbinder
- **PPC**: Speicher-Steckverbinder
- **PPI**: Einschub-Steckverbinder
- **PS**: Programmstrom
- **PS-B**: Programmstrom-Buffer
- **PS-BY**: Programmstrom-Bypass
- **PSME**: externes Speichermodul
- **PS-R**: Programmstrom-Regenerator
- **RAM**: interner Arbeitsspeicher
- **ROM**: interner Programmspeicher
- **SCSI-I**: SCSI-Schnittstelle
- **STB**: Set-Top-Box
- **t**: Zeit
- **TS**: Transportstrom
- **TS-DEMUX**: Transportstrom-Demultiplexer
- **TS-I**: interne Transportstrom-Schnittstelle

## Patentansprüche

1. Interaktives Multimedia-Card-Modul im PC-Card-Format zur Verarbeitung von digitalen MPEG-Transportstromdaten mit einem Karten-Steckverbinder, auf dem eine einheitliche Schnittstelle nach DVB-Standard bereitstellbar ist, einem integrierten Einschubplatz zur Kontaktierung eines externen Speichermoduls und mit einer Cardmodul-Hardware, die ein Speichermedium, eine Transportstrom-Verarbeitungslogik und ein Mikroprozessor-System aufweist,
**dadurch gekennzeichnet,** dass
das externe Speichermodul (PSME) als wechselbares Speichermedium mit einer hohen Zugriffsrate für die im Transportstrom (TS) enthaltenen Programmstromdaten (PS) ausgebildet ist und einen Speicher-Steckverbinder (PPC) für die Datenschnittstelle (CF-I, ATA-I, IDE-I, SCSI-I) aufweist, der mit einem entsprechenden Einschub-Steckverbinder (PPI) in dem integrierten Einschubplatz (PI) zur Ankopplung an die Kartenlogik und an den Mikroprozessor (CPU) trennbar verbunden ist, und die Funktionssteuerung über ein externes, über den Karten-Steckverbinder (PPA) kontaktiertes Gerät (A) erfolgt.

2. Interaktives Multimedia-Card-Modul nach Anspruch 1,
**dadurch gekennzeichnet,** dass
die Datenschnittstellen (CF-I, ATA-I, IDE-I, SCSI-I) auf dem Einschub-Steckverbinder (PPI) alternativ durch eine mikroprozessorgesteuerte entsprechende Signalumbelegung der Steckerpins bereitstellbar sind.

3. Interaktives Multimedia-Card-Modul nach Anspruch 1 oder 2,
**dadurch gekennzeichnet,** dass
das externe Speichermodul (PSME) in Form einer Compact-Flash-Card (CFC) mit einer Compact-Flash- oder ATA-Schnittstelle (CF-I, ATA-I) ausgeführt ist.

4. Interaktives Multimedia-Card-Modul nach Anspruch 1 oder 2,
**dadurch gekennzeichnet,** dass
das externe Speichermodul (PSME) in Form eines miniaturisierten Festplattenmoduls (HDD) mit einer Compact-Flash- oder ATA-Schnittstelle (CF-I, ATA-I) ausgeführt ist.

5. Interaktives Multimedia-Card-Modul nach Anspruch 1 oder 2,
**dadurch gekennzeichnet,** dass
das externe Speichermodul (PSME) in Form einer IDE- oder PCMCIA-Festplatte ausgeführt ist, die über ein Adapterkabel mit dem Einschub-Steckverbinder (PPI, IDE-I, PCC-I) in dem integrierten Einschubplatz (PI) trennbar verbunden ist.

6. Interaktives Multimedia-Card-Modul nach Anspruch 1 oder 2,
**dadurch gekennzeichnet,** dass
das externe Speichermodul (PSME) in Form einer beschreibbaren CD/DVD ausgeführt ist, die mittels eines CD-Brenners beschreibbar und mittels eines CD/DVD-Geräts abspielbar ist, die über Adapterkabel mit dem Einschub-Steckverbinder (PPI, IDE-I, SCSI-I) in dem integrierten Einschubplatz (PI) trennbar verbunden sind.

7. Interaktives Multimedia-Card-Modul nach mindestens einem der Ansprüche 1 bis 6,
**dadurch gekennzeichnet,** dass
das externe Gerät (A) zur Funktionssteuerung und weiteren Datenverarbeitung eine Set-Top-Box (STB) ist, mit der das Card-Modul (CMO, MR) über die DVB-Schnittstelle (DVB-CI) trennbar verbunden ist.

8. Interaktives Multimedia-Card-Modul nach mindestens einem der Ansprüche 1 bis 7,
**dadurch gekennzeichnet,** dass
auf dem Karten-Steckverbinder (PPA) alternative Schnittstellen (DVB-I, PCC-I, SCSI-I) durch eine mikroprozessorgesteuerte entsprechende Signalumbelegung der Steckerpins bereitstellbar sind.

9. Interaktives Multimedia-Card-Modul nach Anspruch 8,
**dadurch gekennzeichnet,** dass
das externe Gerät (A) zur Funktionssteuerung ein Rechner (PC) ist, mit dem das Card-Modul (CMO, MR) über eine PC-Card-Schnittstelle (PCC-I) als alternativer Schnittstelle trennbar verbunden ist.
